# EUROPÄISCHE PATENTANMELDUNG

(11) **EP 2 418 449 A2**
(43) Veröffentlichungstag der Anmeldung: **15.02.2012**
(21) Anmeldenummer: 11450099.4
(22) Anmeldetag: 08.08.2011
(51) Int. Cl.: F28D 20/00

(54) **Vorrichtung zum Einbringen bzw. Entnehmen eines flüssigen Mediums in einen bzw. aus einem Speicherbehälter**

(30) Priorität: 12.08.2010 AT 13482010
(71) Anmelder: Obermayer, Jürgen, 4202 Kirchschlag bei Linz (AT); Rabl, Peter, 4540 Bad Hall (AT); Pink, Werner, 8665 Langenwang (AT)
(72) Erfinder: Obermayer, Jürgen, 4202 Kirchschlag bei Linz (AT); Rabl, Peter, 4540 Bad Hall (AT); Pink, Werner, 8665 Langenwang (AT)
(74) Vertreter: Hübscher, Helmut

(57) **Zusammenfassung**

Es wird eine Vorrichtung zum Einbringen bzw. Entnehmen eines flüssigen Mediums von definierter Temperatur in einen bzw. aus einem Speicherbehälter (1), in dem Schichten mit unterschiedlichen Temperaturen des Mediums vorhanden sein können beschrieben. Dabei ist eine in den Behälter (1) tauchende Zubringer- bzw. Entnahmeleitung (4) für die Flüssigkeit mit einem Ein- bzw. Auslass (5) vorgesehen, der über Temperaturfühlern (6) zugeordnete, gesteuerte Antriebseinrichtungen (9 bis 13) in seiner Höhe auf eine vorwählbare Temperaturschicht einstellbar ist, welche bei der Mediumszufuhr die Temperatur dieses Mediums bzw. bei der Mediumsentnahme eine vorwählbare Entnahmetemperatur aufweist.

## Beschreibung

Die Erfindung betrifft eine Vorrichtung zum Einbringen bzw. Entnehmen eines flüssigen Mediums von definierter Temperatur in einen bzw. aus einem Speicherbehälter, in dem Schichten mit unterschiedlichen Temperaturen des Mediums vorhanden sein können.

Eine solche Vorrichtung kann je nach ihrer Aufgabe und anderen Gegebenheiten sowohl bei offenen als auch bei geschlossenen Speicherbehältern eingesetzt werden. Speicherbehälter dienen verschiedensten Zwecken. Als Beispiel wird auf die Anwendung bei Einrichtungen zur Warm- bzw. Heizungswasserzwischenspeicherung in Zentralheizungs- und Warmwasserbereitungsanlagen verwiesen, bei welchen verschiedene Speicherschichten für die erwähnten Zwecke im Einsatz sind. Wichtig sind solche Speicher auch dann, wenn die Erwärmung bzw. Erhitzung des Wassers über verschiedene, gleichzeitig oder alternierend betriebene Einrichtungen, zum Beispiel Solaranlagen, Wärmepumpen, Windkraftwerke usw. sowie zu deren Ergänzung vorgesehenen mit Brennstoffen oder elektrisch betriebenen Kesseln erfolgt. Je nach der Momentanleistung der Grund- oder Zusatzbeheizung und dem Verwendungszweck ergeben sich die erwähnten Wasserschichten unterschiedlicher Temperatur. Es ist bekannt, für die einzelnen Schichten eigene, ortsfeste Ein- oder Auslässe am oder im Behälter vorzusehen. Dies ist aufwendig und hat den grundsätzlichen Nachteil, dass sich im Betriebsverlauf unterschiedliche Höhenlagen der einzelnen Wärmeschichten ergeben können, die sich nur schwer berücksichtigen lassen. Überdies besteht bei den ortsfesten Ein- und Auslässen die Gefahr, dass sowohl bei der Zu- als auch bei der Ableitung Durchwirbelungen des Mediums im gesamten Speicherbereich zumindest in der Höhe nach aufeinanderfolgenden Schichten auftreten, sodass die gewünschte bzw. für einen ungestörten Betrieb zumindest vorteilhafte Temperaturstaffelung und ihre Einhaltung besonders bei häufiger Zu- und Ableitung in den einzelnen Schichten gestört wird.

Aufgabe der Erfindung ist die Schaffung einer Vorrichtung, die es bei einfacher Bauweise und geringem Installationsbedarf am und im Behälter ermöglicht, die Zu- bzw. Ableitung des Mediums auch bei wechselnder bzw. veränderlicher Dicke und Lage der Schichten unterschiedlicher Temperatur genau auf die jeweils passende Schicht einzustellen und dabei eine unerwünschte Durchwirbelung der anderen Wärmeschichten zu vermeiden.

Die gestellte Aufgabe wird durch eine Vorrichtung der eingangs genannten Art erfindungsgemäß prinzipiell dadurch gelöst, dass eine in den Behälter tauchende Zubringer- bzw. Entnahmeleitung für die Flüssigkeit einen Ein- bzw. Auslass aufweist, der über Temperaturfühlern zugeordnete gesteuerte Antriebseinrichtungen in seiner Höhe auf eine vorwählbare Temperaturschicht einstellbar ist, welche bei der Mediumszufuhr die Temperatur dieses Mediums bzw. bei der Mediumsentnahme eine vorwählbare Entnahmetemperatur aufweist.

Neben der Lösung der gestellten Aufgabe ergibt sich durch die erfindungsgemäße Ausführung der entscheidende Vorteil, dass die Vorrichtung mit einfachen Mitteln über die gesteuerten Antriebseinrichtungen an Behälter mit unterschiedlicher Größe, unterschiedlichem Inhalt (neben Wasser auch andere flüssige Medien z. B. Wärmeträgeröle) und unterschiedlicher bzw. wechselnder Lage bzw. Anzahl der Schichten verschiedener Temperaturen angepasst werden kann.

Derzeit sind im Rahmen der Erfindung und ohne deren Einschränkung verschiedene Ausführungen vorgesehen. Eine dieser Ausführungen zeichnet sich dadurch aus, dass die Flüssigkeitsleitung als biegsame Leitung, z. B. als Schlauch ausgebildet ist, in dessen Ein- bzw. Auslassbereich wenigstens ein Temperaturfühler vorgesehen ist, der über eine Steuereinrichtung eine Antriebseinrichtung zur Höheneinstellung des Ein- bzw. Auslasses auf die zugeordnete Temperaturschicht betätigt.

Über den Temperaturfühler wird die momentan im Ein- bzw. Auslassbereich herrschende Temperatur festgestellt, sodass eine Einstellung auf die gewünschte Temperaturschicht möglich ist.

Für die je nach Ausbildung in- oder außerhalb des Behälters angebrachten Antriebseinrichtungen selbst sind wieder verschiedene Varianten möglich, beispielsweise seien hier erwähnt Elektro-, Hydraulik- oder Pneumatikantriebe mit oder ohne Spindelführungen, Linearantrieben, Teleskopantrieben od. dgl.. Geeignet ist jeder Antrieb, der eine vorzugsweise stufenlose Verstellung der Mündung der Zubringer- bzw. der Entnahmeleitung und des Temperaturfühlers ermöglicht. Die erfindungsgemäße Vorrichtung eignet sich gleichermaßen für die Verwendung bei Kaltspeichern, z. B. Medien von Kälteanlagen, wie bei Warmspeichern.

Nach einer dieser Varianten ist ein mit dem Ein- bzw. Auslassbereich verbundener mit Gas bzw. Luft befüll- bzw. entleerbarer Schwimmer, z. B. ein Ballon, vorgesehen, der über die Leitung von einem Kompressor oder einer anderen Druckgasquelle gesteuert wird.

Nach einer anderen Variante kann die erwähnte biegsame Leitung im Ein- bzw. Auslassbereich von einem durch eine Steuereinrichtung betätigten Seil- oder Kettentrieb einstellbar vorgesehen sein.

Nach einer dritten Ausführung ist die Flüssigkeitsleitung als über eine von Temperaturfühlern beaufschlagte Steuereinrichtung gesteuerte Antriebseinrichtung betätigte teleskopisch in ihrer Länge einstellbare oder höhenverstellbare Tauchrohrlanze ausgebildet, die im Ein- bzw. Auslassbereich mit dem bzw. den Temperaturfühlern ausgestattet ist.

Alle beschriebenen Ausführungen können durch Änderungen der Außenarmaturen für gesonderte Zu- und Ableitungen zu Verbrauchern bzw. Warmwassererzeugern, der Leitungslänge und gegebenenfalls des Leitungsquerschnittes sowie durch entsprechende nachträgliche Einstellung der Steuer- bzw. Antriebseinrichtungen an Behälter unterschiedlicher Größe und Anzahl bzw. Mächtigkeit der Schichten angepasst werden.

Bei einem Verfahren zum Betreiben einer Vorrichtung zum Einbringen bzw. Entnehmen eines flüssigen Mediums von definierter Temperatur in einen bzw. aus einem Speicherbehälter, in dem Schichten mit unterschiedlichen Temperaturen des Mediums vorhanden sein können, empfiehlt es sich eine Steuerung vorzusehen, welche die Schichttemperatur im Ein- bzw. Auslassbereich ermittelt und den Ein- bzw. Auslassbereich in Abhängigkeit einer Vorwahltemperatur insbesondere stufenlos in die gewünschte Temperaturschicht zwecks Ladung oder Entnahme verlagert. Somit kann stets das gewünscht temperierte Medium entnommen werden und/oder kann exakt die richtige Temperaturschicht mit dem Medium geladen werden.

Zur schnelleren Bereitstellung von erhitztem flüssigen Medium, beispielsweise Heißwasser, empfiehlt es sich zunächst entsprechend vortemperiertes Medium aus dem oberen bzw. mittleren Bereich des Speichers zu entnehmen, dieses Medium mit einer Heizung, einem Solarkollektor, einer Wärmepumpe od. dgl. zu erwärmen und das erhitzte Medium anschließend wieder in die entsprechend heiße Schicht einzubringen, bevor der Speicher bei Bedarf von oben nach unten mit erhitztem Medium durchgeladen wird. Zur Bestimmung der Temperaturspreizung im Speicher kann sowohl die Mediumtemperatur im Bereich des Behälterboden als auch im Bereich der Behälterdecke gemessen werden. Zwischen den den beiden Messwerten zugeordneten Schichtlagen wird bzw. werden der Ein- bzw. Auslassbereich in Abhängigkeit einer Vorwahltemperatur verfahren, wobei aus dem über die Speicherhöhe vorherrschenden Temperaturgradienten im Speicher, der mit den Temperaturfühlern bei einem Verlagern des Ein- bzw. Auslassbereiches zwischen den beiden Endlagen aufgenommen werden kann, die im Speicher vorhandene Energie und entnehmbare errechnet werden kann.

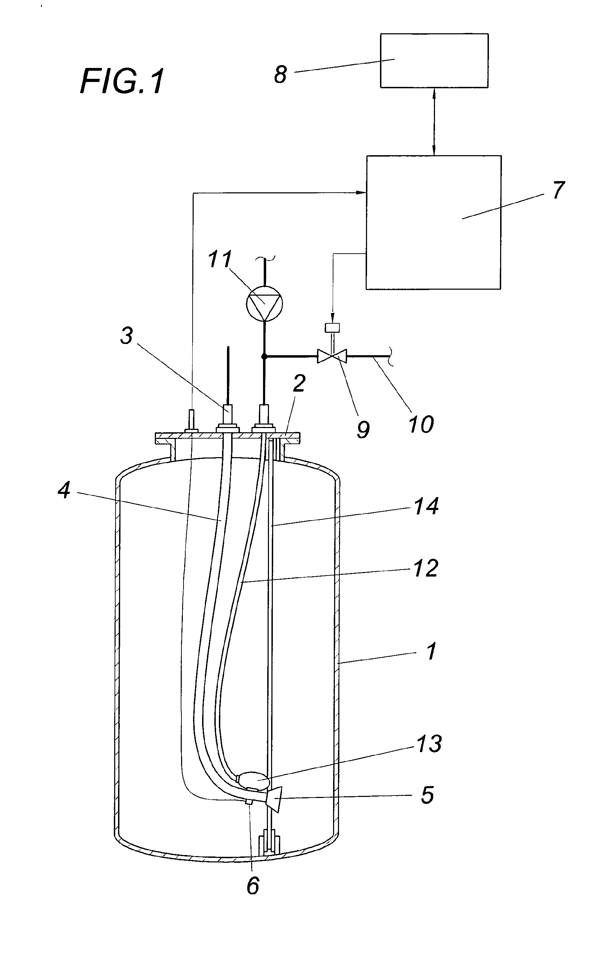

Weitere Einzelheiten und Vorteile des Erfindungsgegenstandes entnimmt man der nachfolgenden Zeichnungsbeschreibung. Es zeigen
Fig. 1, 2, 3 und 4 vier Varianten der erfindungsgemäßen Vorrichtung beim Einbau in einen Speicherbehälter.

Bei den Ausführungsbeispielen wurde der Speicherbehälter 1 jeweils als geschlossener Behälter dargestellt, durch dessen Deckel 2 ein Wasseranschluss 3 geführt ist. der (über nicht dargestellte) Armaturen mit Wasserzu- und Ableitungen verbunden werden kann.

Nach der Fig. 1 besteht die erfindungsgemäße Vorrichtung aus einem flexiblen Schlauch 4, dessen Mündung durch ein Ausgleichsgewicht 5 beschwert ist und der in der Nähe des dort vorgesehenen Auslassbereichs einen Temperaturfühler 6 trägt. Die vom Temperaturfühler 6 erfasste Temperatur wird einer Steuereinheit 7 zugeführt, die mit einem Ereignisspeicher 8 verbunden ist, der Daten für den jeweils erwünschten Betriebszustand, also Zu- oder Ableitung momentan zu aktivierende Anschlussleitung und vorzusehende Schichttemperatur gespeichert enthält. Die Daten werden und für den Momentanfall ausgewählt der Steuereinheit 7 zugeführt, die beim Ausführungsbeispiel ein Ventil 9 in einer Luftleitung 10 betätigt und im Bedarfsfall auch ein Gebläse 11 bzw. einen Kompressor ein- und ausschaltet. Je nach Schaltung des Gebläses 11 und Öffnung oder Schließung des Ventils 9 wird ein im Behälter 1 vorgesehener Luftschlauch 12 beaufschlagt oder entleert, welcher Schlauch 12 damit die Füllung oder Entleerung eines Luftballons 13 bewirkt, der füllungsabhängig im Behälter 1 auf- und ab verstellt werden kann, bis er im jeweiligen Fall die der Temperatur nach interessante Schicht in der Behälterfüllung erreicht und dieser das die entsprechende Temperatur aufweisende Wasser zuführt, oder das Wasser aus dieser Schicht entnimmt.

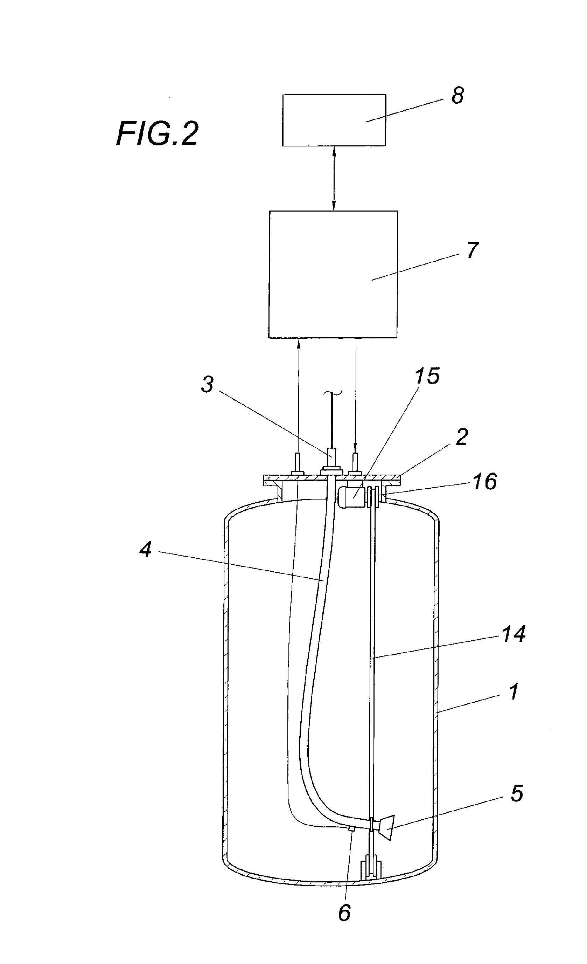

Die Vorrichtung nach Fig. 2 entspricht in ihrem prinzipiellen Aufbau der Vorrichtung nach Fig. 1, doch ist der dort vorgesehene Ballon 13 durch einen Seil- oder Kettentrieb 14 ersetzt, für den eine mit einem Motor 15 gekoppelte Antriebstrommel 16 vorgesehen ist. Der Motor 15 wird wieder ereignisabhängig über die Steuereinrichtung 7 betätigt.

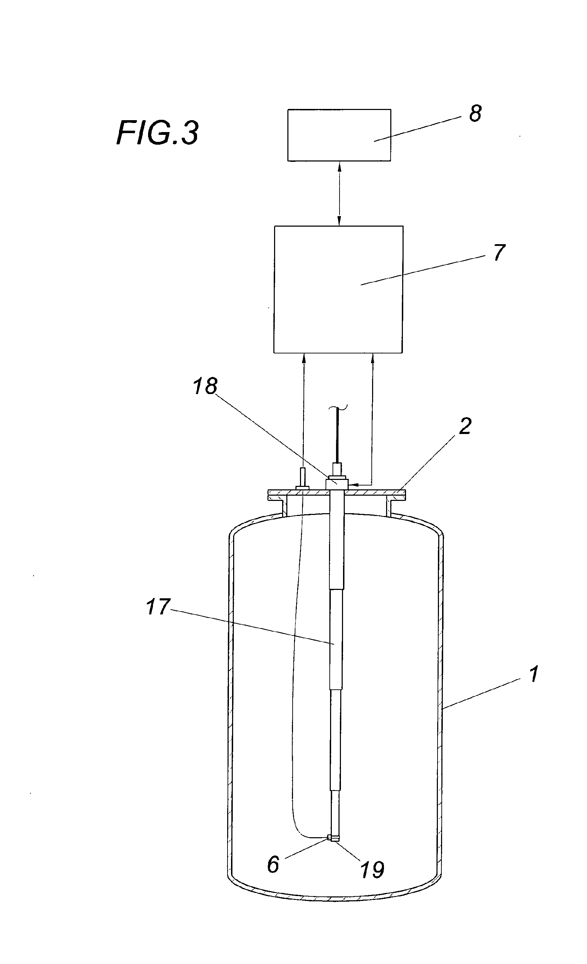

Die Ausführung nach Fig. 3 unterscheidet sich von den bisherigen Ausführungen dadurch, dass der nach Fig. 1 und 2 vorgesehene Schlauch 4 durch eine in den Behälter 1 einragende Rohrlanze 17 mit Auslass 19 ersetzt ist, die über einen Antriebsmotor und ein Zwischengetriebe 18 im Behälter teleskopisch in ihrer Länge einstellbar ist oder der Höhe nach ein- und ausgefahren werden kann. Denkbar wären für den Antrieb auch hydraulische oder pneumatische Zylinder, insbesondere Direktantriebe.

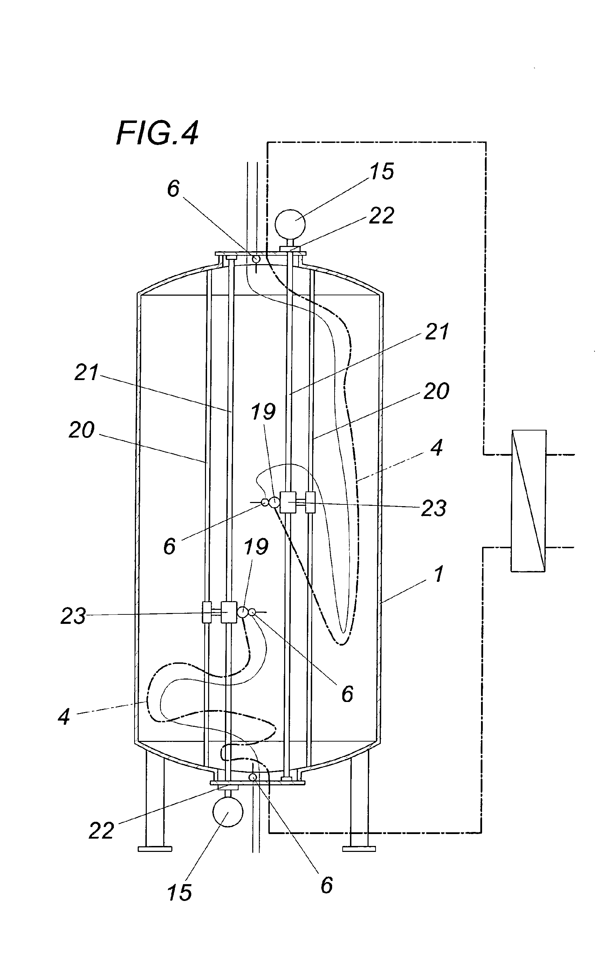

Im Ausführungsbeispiel nach Fig. 4 umfassen die beiden Antriebseinrichtungen, eine für die Beschickung und eine für die Entnahme, eine Spindelführung 20 und eine der Spindelführung 20 zugeordnete Spindel 21, die von je einem außerhalb des Behälters 1 angeordneten und mit der Spindel 21 über eine Magnetkupplung 22 antriebsverbundenen, Motor 15 drehantreibbar ist. Der Ein- bzw. Auslass 19 ist auf einem eine Spindelmutter aufweisenden Schlitten 23 vorgesehen, der sowohl auf der Spindelführung 20, einem Profil, als auch auf der Spindel 21 geführt ist. Zudem sind dem Behälterboden und der Behälterdecke Temperaturfühler 6 zugeordnet.

Die Merkmale der Ausführungsbespiele können für eine erfindungsgemäße Lösung in beliebiger Weise kombiniert werden. Insbesondere ist die Anzahl der Be- bzw. Entladevorrichtungen je Behälter beliebig.

## Patentansprüche

1. Vorrichtung zum Einbringen bzw. Entnehmen eines flüssigen Mediums von definierter Temperatur in einen bzw. aus einem Speicherbehälter (1), in dem Schichten mit unterschiedlichen Temperaturen des Mediums vorhanden sein können, **dadurch gekennzeichnet, dass** eine in den Behälter (1) tauchende Zubringer- bzw. Entnahmeleitung (4, 17) für das flüssige Medium einen Ein- bzw. Auslass (5, 19) aufweist, welcher Ein- bzw. Auslass (5, 19) über Antriebseinrichtungen (9-13, 14-16, 18) mit einem Linearantrieb, insbesondere Teleskopantrieb oder Spindelführung, in seiner Höhe auf eine vorwählbare Temperaturschicht einstellbar ist, welche bei der Mediumszufuhr die Temperatur dieses Mediums bzw. bei der Mediumsentnahme eine vorwählbare Entnahmetemperatur aufweist, wobei diese Antriebseinrichtungen (9-13, 14-16, 18) über zugeordnete Temperaturfühler (6) gesteuert werden.

2. Vorrichtung nach Anspruch 1, **dadurch gekennzeichnet, dass** die Flüssigkeitsleitung als biegsame Leitung, z. B. als Schlauch (4) ausgebildet ist, in dessen Ein- bzw. Auslassbereich (5) wenigstens ein Temperaturfühler (6) vorgesehen ist, der über eine Steuereinrichtung (7, 8) eine Antriebseinrichtung (9-13, 14-16) zur Höheneinstellung des Ein- bzw. Auslasses (5) auf die zugeordnete Temperaturschicht betätigt.

3. Vorrichtung nach den Ansprüchen 1 oder 2, **dadurch gekennzeichnet, dass** als Antriebseinrichtung (9-13) ein mit dem Auslassbereich (5) verbundener und über eine Leitung (12) gesteuert, mit Gas bzw. Luft befüll- bzw. entleerbarer Schwimmer, z. B. ein Ballon (13), vorgesehen ist.

4. Vorrichtung nach den Ansprüchen 1 oder 2, **dadurch gekennzeichnet, dass** die Ein-Auslasshöhe der biegsamen Leitung (4) mit einem durch eine Steuereinrichtung (7, 8) betätigten Seil- oder Kettentrieb (14-16) einstellbar ist.

5. Vorrichtung nach Anspruch 1, **dadurch gekennzeichnet, dass** die Flüssigkeitsleitung (18) als teleskopisch in ihrer Länge einstellbare oder höhenverstellbare Tauchrohrlanze (17) ausgebildet ist, welche teleskopische Einstellung in ihrer Länge oder Höhenverstellung über eine Antriebseinrichtung (18) betätigbar ist, wobei diese Antriebseinrichtung (18) über eine von Temperaturfühlern (6) angesteuerte Steuereinrichtung gesteuert wird und wobei diese Tauchrohrlanze (17) im Ein- bzw. Auslassbereich (19) mit dem bzw. den Temperaturfühlern (6) ausgestattet ist.

6. Vorrichtung nach den Ansprüchen 1 oder 2, **dadurch gekennzeichnet, dass** die Antriebseinrichtungen eine Spindelführung und eine der Spindelführung zugeordnete Spindel umfassen, die vorzugsweise von einem außerhalb des Behälters (1) angeordneten und mit der Spindel über eine Magnetkupplung antriebsverbundenen, Antrieb drehantreibbar ist.

7. Vorrichtung nach einem der Ansprüche 1 bis 6, **dadurch gekennzeichnet, dass** dem Behälterboden und der Behälterdecke je wenigstens ein Temperaturfühler (6) zugeordnet ist.

8. Verfahren zum Betreiben einer Vorrichtung zum Einbringen bzw. Entnehmen eines flüssigen Mediums von definierter Temperatur in einen bzw. aus einem Speicherbehälter, in dem Schichten mit unterschiedlichen Temperaturen des Mediums vorhanden sein können, **gekennzeichnet durch** eine Steuerung welche die Schichttemperatur im Ein- bzw. Auslassbereich ermittelt und den Ein- bzw. Auslassbereich in Abhängigkeit einer Vorwahltemperatur insbesondere stufenlos in die gewünschte Temperaturschicht zwecks Ladung oder Entnahme verlagert.

9. Verfahren nach Anspruch 8, **dadurch gekennzeichnet, dass** zur schnelleren Bereitstellung von erhitztem flüssigen Medium zunächst vortemperiertes Medium aus dem Speicher entnommen, erwärmt und anschließend in die entsprechend heiße Schicht eingebracht wird und dass der Speicher bei Bedarf anschließend von oben nach unten mit erhitztem Medium durchgeladen wird.

10. Verfahren nach Anspruch 8 oder 9, **dadurch gekennzeichnet, dass** die Mediumtemperatur zur Bestimmung der Temperaturspreizung im Speicher sowohl im Bereich des Behälterboden als auch im Bereich der Behälterdecke gemessen wird und dass der Ein- bzw. Auslassbereich zwischen den den beiden Messwerten zugeordneten Schichtlagen in Abhängigkeit der Vorwahltemperatur verfahren wird.
